(19) Europäisches Patentamt
European Patent Office
Office européen des brevets

(11) **EP 2 034 683 A1**

(12) **EUROPÄISCHE PATENTANMELDUNG**

(43) Veröffentlichungstag:
**11.03.2009 Patentblatt 2009/11**

(51) Int Cl.:
*H04L 25/06* (2006.01)   *H04L 25/40* (2006.01)
*H04L 7/033* (2006.01)

(21) Anmeldenummer: **07115613.7**

(22) Anmeldetag: **04.09.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **Siemens Aktiengesellschaft Österreich**
**1210 Wien (AT)**

(72) Erfinder: **Sterz, Walter**
**2340, Mödling (AT)**

(54) **Verfahren zum Auswerten von Empfangssignalen bei serieller Datenübertragung**

(57) Die Erfindung betrifft Verfahren zum Auswerten von Empfangssignalen bei serieller Datenübertragung, wobei ein Empfangssignal aus einer Anzahl von Abschnitten, insbesondere Worten, besteht. Dabei weisen die Abschnitte, insbesondere die Worte, zwischen einem Start- und Stopppunkt eine definierte Länge und eine definierte Zahl von Informationseinheiten, insbesondere Bits, auf. Dabei werden die Informationseinheiten jedes Abschnittes des Empfangssignals über die definierte Länge des Abschnittes n-fach abgetastet (2,3). Dann werden während einer Abtastung ermittelte Abtastwerte für den jeweiligen Abschnitt in zeitlicher Reihenfolge abgespeichert (4), wobei jede ununterbrochene Folge von gleichwertigen Abtastwerten einen High- bzw. Lowbereich definiert (5). Daraufhin wird dann anhand der durch die Anzahl an aufeinanderfolgenden, gleichwertigen Abtastwerte bestimmten Länge des High- bzw. Lowbereiches die darin enthaltene Anzahl von entsprechenden Informationseinheiten bestimmt (6,7).

```
        Start                    1

Empfangen eines Abschnitts       2
   des Empfangssignals

n-fache Überabtastung jeder      3
Informationseinheit dieses Abschnitts

Abspeichern der n Abtastwerte je   4
Informationseinheit in zeitlicher Reihenfolge

Suche nach gleichwertigen,        5
aufeinanderfolgenden Abtastwerten in der
abgespeicherten Reihenfolge

Ermitteln der Anzahl an gleichwertigen,   6
aufeinanderfolgenden Abtastwerten

Ermitteln der entsprechenden Anzahl an    7
gleichwertigen Informationseinheiten mit gleichem
Wert anhand der ermittelten Anzahl an
gleichwertigen, aufeinanderfolgenden Abtastwerte

        Ende                     8
```

Fig. 1

**EP 2 034 683 A1**

**Beschreibung**

**Technisches Gebiet**

Die Erfindung betrifft Verfahren zum Auswerten von Empfangssignalen bei serieller Datenübertragung, wobei ein Empfangssignal aus einer Anzahl von Abschnitten, insbesondere Worten, besteht. Dabei weisen die Abschnitte, insbesondere die Worte, zwischen einem Start- und Stopppunkt eine definierte Länge und eine definierte Zahl von Informationseinheiten, insbesondere Bits, auf.

**Stand der Technik**

Unter Daten- oder Informationsübertragung werden im Allgemeinen alle Methoden verstanden, bei denen Daten von einem so genannten Sender (Daten- oder Informationsquelle) zu einem so genannten Empfänger (Daten- oder Informationssenke) übertragen werden. Dabei wird - technisch gesehen - vom Sender eine physikalische Größe (z.B. elektrische Spannung, elektrischer Strom, Frequenz elektromagnetischer Wellen, etc.) zeitlich variiert und vom Empfänger gemessen. Diese physikalische Erscheinungsform von Daten bzw. Informationen wird üblicherweise als Signal bezeichnet. Auf Seiten des Empfängers kann die gemessene physikalische Erscheinungsform auch Empfangssignal genannt werden.

Werden die entsprechenden Informationen oder Daten der physikalischen Größe (z.B. elektrische Spannung, elektrischer Strom, Frequenz elektromagnetischer Wellen, etc.) kontinuierlich aufgeprägt, so wird die Übertragung als analog bezeichnet. Dabei ist jeder Wert in einem festgelegten Intervall zulässig und zu jedem Zeitpunkt relevant.

Werden die Daten bzw. entsprechenden Informationen der physikalischen Größe diskret aufgeprägt, so wird von digitaler Datenübertragung gesprochen. Bei der digitalen Datenübertragung darf der Wert der jeweilig eingesetzten physikalischen Größe (z.B. elektrische Spannung, etc.) nur innerhalb zulässiger Wertgrenzen variieren; d.h. digitale Signale existiert nur zu bestimmten Zeitpunkten als ein bestimmter, erlaubter Wert oder Wertbereich.

In der Digitaltechnik können diese erlaubten Werte üblicherweise zwei Zustände annehmen. Diese Zustände werden dann z.B. durch ein Vorhanden sein einer physikalischen Größe (z.B. elektrische Spannung, etc.) ausgedrückt, welche größer oder kleiner als ein vorgegebener Wert sein kann. Für eine digitale Übertragung in Form von Signalen müssen diese Zustände beispielsweise als logische Variable dargestellt werden. In dieser Variablen kann z.B. einer von zwei Werten (z.B. "0" oder "1") oder einer von zwei logischen Werten wie z.B. "high" oder "low" enthalten kann. Demgemäß werden jene Teile eines Signals, welche den Wert "1" bzw. "high" aufweisen, auch als Highbereiche bezeichnet. Jene Signal-Teile, bei denen der Wert "0" bzw. "low" festgestellt wird, werden dementsprechend Lowbereiche genannt.

Eine Einheit eines Signals, von welcher über eine definierte Länge entweder der Wert "high" oder "low" angenommen wird, wird auch als Informationseinheit bezeichnet. Wird dabei von einem Informationsträger ausgegangen, von dem genau zwei Zustände dargestellt werden können, so wird diese Informationseinheit auch ein Bit genannt. Bit bezeichnet dabei eine Maßeinheit für eine Datenmenge, wobei ein Bit die kleinste, darstellbare Datenmenge beschreibt, sowie eine Maßeinheit für den Informationsgehalt eines Signals. Dabei ist ein Bit der Informationsgehalt, der in einer Auswahl aus zwei gleich wahrscheinlichen Möglichkeiten enthalten ist.

Aus mehreren Informationseinheiten wird dann ein sogenannter Abschnitt gebildet, wobei ein Signal bzw. Empfangssignal wiederum aus einen oder mehreren Abschnitten zusammengesetzt sein kann. Die Übertragung der Abschnitte eines Signals kann beispielsweise mit oder ohne Pausen zwischen den Abschnitten vom Sender zum Empfänger erfolgen. In der Digitaltechnik umfassen Abschnitte von Signalen meist eine definierte Anzahl an Informationseinheiten und eine definierte Länge auf. Umfasst ein Signal-Abschnitt genau acht Informationseinheiten, so wird ein derartiger Abschnitt auch als ein Wort oder ein Byte bezeichnet.

Erfolgt eine Übertragung von Informationseinheiten (z.B. Bits) der Signal-Abschnitte bzw. Worte nacheinander, so wird von einer so genannten seriellen Datenübertragung gesprochen. Bei der seriellen Datenübertragung werden beispielsweise Worte oder Bytes Informationseinheit für Informationseinheit bzw. Bit für Bit über ein Medium (z.B. Kabel, etc.) vom Sender zum Empfänger geleitet.

Bei der seriellen Datenübertragung kann üblicherweise zwischen synchroner und asynchroner, serieller Datenübertragung unterschieden werden. Dabei ist die synchrone Datenübertragung dadurch gekennzeichnet, dass durch kontinuierliches Senden und geeignetes Kodieren der Daten der Empfänger mit einer Übertragungsgeschwindigkeit des Senders synchronisiert werden kann.

Bei der asynchronen, seriellen Datenübertragung werden nur dann zu einem beliebigen Zeitpunkt Daten übertragen, wenn Daten anfallen (z.B. durch einen Tastendruck, etc. generiert werden). Daher wird für die gesendeten Daten so genannte Synchronisationsinformation benötigt. Daher wird der Beginn eines gesendeten Signals oder Signal-Abschnitts (z.B. Wort) mit einem Startpunkt gekennzeichnet, welcher üblicherweise mit dem Wert "high" oder "1" versehen ist und meist als Startbit bezeichnet wird. Durch dieses Startbit wird eine "Quasisynchronisation" zwischen Sender und Empfänger erzeugt. Vom Empfänger wird das Startbit erkannt und dann die folgenden Informationseinheiten (Bits) als Daten interpretiert, wobei üblicherweise die Anzahl der als Daten gesendeten Informationseinheiten (z.B. Datenbits) dem Empfänger bekannt ist. Das Ende eines Signal-Abschnitts wird bei der asynchronen, seriellen Datenübertragung üblicherweise durch einen Stopppunkt - ein so genanntes Stoppbit gekennzeichnet. Dieses Stoppbit weist meist den Wert "low" oder "0" auf und wird vom Empfänger das Ende der im Signal-Abschnitt (Wort) übertragenen Daten erkannt. Danach wird vom Empfänger auf das nächste Startbit gewartet, welches nach einer zeitlichen Unterbrechung oder unmittelbar nach dem Stoppbit des vorangegangenen Signal-Abschnitts (Wort) übertragen werden kann.

Werden Daten wie z.B. Echtzeit- oder Sprachdaten mittels serieller Datenübertragung beispielsweise auf vorhandenen oder einfach zu verlegenden Kupferkabel übertragen, so ist es nicht nur notwendig, eine entsprechende Datenrate (z.B. 10 kBit/s) zu erzielen, sondern auch eine Länge der Leitung zu berücksichtigen, da die Länge der Leitung die Verzerrung des gesendeten Signals stark beeinflusst. Üblicherweise kommt es zu einem so genannten Verschleifen von Flanken der Informationseinheiten.

Als Flanke wird dabei ein Übergang zwischen zwei Informationseinheiten mit unterschiedlichen Werten bezeichnet, welcher idealisiert einen direkten Sprung von dem einen Wert auf den anderen Wert darstellt. Als Flanke wird daher z.B. ein Übergang von einer Informationseinheit (Bit) mit dem Wert "high" bzw. "1" auf eine Informationseinheit (Bit) mit dem Wert "low" bzw. "0" oder der Übergang von einer Informationseinheit (Bit) mit dem Wert "low" bzw. "0" auf eine Informationseinheit (Bit) mit dem Wert "high" bzw. "1" bezeichnet.

Durch das Verschleifen der Flanken der Informationseinheiten, welches mit steigender Länge der Leitung zunimmt, werden z.B. Informationseinheiten mit dem Wert "high" bzw. "1" tendenziell länger und Informationseinheiten mit dem Wert "low" bzw. "0" tendenziell kürzer - im Vergleich zu einer definierten und vom Empfänger erwarteten Länge einer Informationseinheit bzw. eines Bits. Bei Lowbereichen kann das Verschleifen der Flanken sogar dazu führen, dass diese im Empfangssignal völlig verschwinden.

Bei herkömmlichen asynchronen, seriellen Empfängerbausteinen wird beispielsweise das Empfangssignal detektiert, indem von der Flanke des Startbits ausgehende jede Informationseinheit bzw. jedes Bit z.B. 16-fach überabgetastet wird. Dann wird durch Mehrheitseinscheidung der mittleren drei Abtastwerte jedes Bits der Wert dieses Bits bestimmt. Diese Lösung weist allerdings den Nachteil auf, dass durch das Verschleifen der Flanken im Empfangssignal bei großen Leitungslängen (z.B. ein bis zwei Kilometer) der Zeitpunkt der Flanke des Startbits ungenau wird und dass durch die dadurch bedingten unterschiedlichen Bitbreiten von High- bzw. Lowbereichen Abtastwerte für die Mehrheitsentscheidung in benachbarte Bits fallen können. Dadurch entsteht auf der Empfängerseite eine Fehlinterpretation des Empfangssignals und eine höhere Fehlerrate in der Datenübertragung (z.B. Bitfehler, etc.).

Eine Möglichkeit Datenfehler wegen Verschleifens der Flanken bei der Übertragung des Signals über eine längere Leitung (z.B. mit einer Länge von 2 bis 4 km) zu verhindern, stellt der Einsatz von so genannten DSL-Modems dar. Diese Lösung weist allerdings den Nachteil auf, dass der Einsatz von DSL-Modems höhere Kosten verursacht und die Lösung komplexer zu realisieren ist.

## Darstellung der Erfindung

Der Erfindung liegt daher die Aufgabe zugrunde, ein Verfahren für serielle Datenübertragung - insbesondere über längere Leitungen - anzugeben, bei welchem auf einfache und preiswerte Weise Fehler bei einem Auswerten von Empfangssignalen reduziert werden.

Die Lösung dieser Aufgabe erfolgt durch ein Verfahren eingangs angegebener Art, wobei die Informationseinheiten jedes Abschnittes des Empfangssignals über die definierte Länge des Abschnittes n-fach abgetastet werden. Dann werden während einer Abtastung ermittelte Abtastwerte für den jeweiligen Abschnitt in zeitlicher Reihenfolge abgespeichert und dabei definiert jede ununterbrochene Folge von gleichwertigen Abtastwerten einen High- bzw. Lowbereich. Dann wird anhand der durch die Anzahl an aufeinanderfolgenden, gleichwertigen Abtastwerte bestimmten Länge des High- bzw. Lowbereiches die darin enthaltene Anzahl von entsprechenden Informationseinheiten bestimmt.

Der Hauptaspekt des erfindungsgemäßen Verfahrens besteht darin, dass es auf einfache und kostengünstige Weise realisiert werden kann. Das erfindungsgemäße Verfahren kann ohne zusätzlichen Aufwand bzw. Einsatz von zusätzlichen Bauteilen wie z.B. Modems auf der Empfängerseite implementiert werden. Es ermöglicht außerdem einen robusten Empfang beispielsweise bei fehlenden Stopppunkten wie Stoppbits im Empfangssignal und damit eine erhöhte Störfestigkeit, insbesondere bei größeren Leitungslängen.

Eine zweckmäßige Ausgestaltung der Erfindung sieht vor, dass die in einer durch die Anzahl an aufeinanderfolgenden, gleichwertigen Abtastwerten bestimmten Länge des High- bzw. Lowbereiches enthaltene Anzahl von entsprechenden Informationseinheiten gemäß der Formel $((2*x-1)*n)/2 + 1 <= n*x <= ((2*x + 1)*n)/2$ ermittelt wird. Dabei stellen der Ausdruck $((2*x-1)*n)/2 + 1$ eine untere Grenze und der Ausdruck $((2*x + 1)*n)/2$ eine obere Grenze dar. Zwischen diesen Grenzen liegt vorteilhaft die Anzahl an aufeinanderfolgenden, gleichwertigen Abtastwerten einer bestimmten Länge des High- bzw. Lowbereiches, um einer Anzahl an x Informationseinheiten zu entsprechen. Die Variable x steht dabei für eine natürliche, ganze Zahl größer gleich 1, die Variable n für die n-fache Abtastung jeder Informationseinheit und der Ausdruck $n*x$ stellt einen Idealwert für eine Anzahl an Abtastwerten bei unverfälschtem Empfangssignal dar.

Durch eine Verwendung der oben angeführten Formel sowie der oberen und unteren Grenze kann auf einfache und vorteilhafte Weise auf der Empfängerseite die Anzahl von gleichwertigen Informationseinheiten ermittelt werden, welche in einer bestimmten Länge eines High- bzw. Lowbereichs des Empfangssignals enthalten sind. Dabei ist es günstig, wenn für den Wert 1 der Variable x, welcher einer Anzahl von einer Informationseinheit entspricht, die untere Grenze auf den Wert 2 gesetzt wird. Denn für eine Variablenbelegung von n gleich 1 und x gleich 1 in der Formel für die untere Grenze würde einen Wert von 1,5 ergeben, welcher z.B. als Anzahl an Abtastwerten nicht realisierbar ist.

Es ist auch vorteilhaft, wenn die in einer durch die Anzahl an aufeinanderfolgenden, gleichwertigen Abtastwerten bestimmte Länge des High- bzw. Lowbereiches enthaltene Anzahl von entsprechenden Informationseinheiten anhand von zumindest einer Tabelle ermittelt wird, da durch den Einsatz von zumindest einer Tabelle auf der Empfängerseite rasch und auf einfache Weise ein Zusammenhang zwischen einer Anzahl an Abtastwerten von Informationseinheiten mit gleichem Wert und einer Anzahl dieser Informationseinheiten hergestellt werden kann.

Eine besonders zweckmäßige Ausführungsform des erfindungsgemäßen Verfahrens sieht vor, dass für eine Ermittlung der Anzahl an Informationseinheiten eine Tabelle für Highbereiche und eine Tabelle für Lowbereiche eingesetzt wird. Denn durch den Einsatz von verschiedenen Tabellen für High- und Lowbereich kann auf vorteilhafte Weise die durch das Verschleifen der Flanken unterschiedliche Länge der jeweiligen Informationseinheit berücksichtigt werden.

Des weiteren empfiehlt sich, wenn eine adaptive Anpassung derart durchgeführt wird, dass anhand von bereits ermittelten Informationseinheiten durchschnittliche Werte für die Länge dieser Informationseinheiten bestimmt werden und dieser durchschnittlichen Werte für die weitere Ermittlung der Anzahl an Informationseinheiten verwendet werden. Diese Vorgehensweise ermöglicht auf vorteilhafte Weise eine einfache, empfängerseitige Anpassung des erfindungsgemäßen Verfahrens an unterschiedliche Länge von Informationseinheiten (Bitbreiten), welche durch das Verschleifen der Flanken bei der Datenübertragung entstehen.

Es ist vorteilhaft, wenn Folgen von aufeinanderfolgenden, gleichwertigen Abtastwerten, von welchen eine vorgegebene Anzahl nicht überschritten wird, als Störimpulse erkannt und für die weitere Auswertung nicht herangezogen werden. Auf diese Weise werden von meist einzelnen, fehlerhaften Abtastwerten keine Fehler in der Datenauswertung verursacht. Störimpulse beispielsweise werden damit unterdrückt und bewirken vorteilhafter Weise keinen Fehler.

Eine besonders zweckmäßige Ausführungsform des erfindungsgemäßen Verfahrens sieht vor, dass bei einer Auswertung eines Abschnitt nach einer definierten Zahl an Informationseinheiten ein Stopppunkt mit definiertem Wert erwartet wird - üblicherweise der Wert "low" oder "0". Es wird dann der Wert jener Informationseinheit, welche als Stopppunkt des Abschnitts interpretiert wird, überprüft und dann, wenn als Wert der als Stopppunkt des Abschnitts interpretierten Informationseinheit nicht der erwarteten Wert - also nicht der Wert "low" bzw. "0" - detektiert wird, die Anzahl der bereits ausgewerteten Informationseinheiten dieses Abschnitts bestimmt. In Abhängigkeit von dieser Anzahl wird dann die als Stopppunkt interpretierte Informationseinheit entweder als Startpunkt des folgenden Abschnitts (d.h. die festgestellte Anzahl ist größer oder gleich der definierten Zahl an Informationseinheiten eines Abschnitts) oder letzte Informationseinheit vor dem Stopppunkt des Abschnitts (d.h. die festgestellte Anzahl ist kleiner als die definierte Zahl an Informationseinheiten eines Abschnitts) interpretiert.

Diese Vorgehensweise hat den Vorteil, dass bei auftretenden Fehlern beim Stopppunkt, insbesondere beim Verschwinden des Stopppunktes, verhindert wird, dass eine falsche Flanke als Startpunkt des nächsten Abschnitts des Empfangssignals interpretiert wird.

Es ist günstig, wenn die Auswertung des Empfangssignals an einer asynchronen, seriellen Schnittstelle durchgeführt wird, da durch eine empfängerseitige Verwendung des erfindungsgemäßen Verfahrens eine Reduktion von Fehlern eine erhöhte Störfestigkeit beim Auswerten des Empfangssignals erzielt wird. Ein Verschleifen von Flanken sowie unterschiedliche Längen von Informationseinheiten (unterschiedliche Bitbreiten) haben daher eine geringere Auswirkung auf die Fehlerrate.

Vorzugsweise wird als asynchrone, serielle Schnittstelle eine so genannte EIA-422-Schnittstelle eingesetzt, da diese Schnittstelle, welche auch als RS-422-Schnittstelle bezeichnet wird, international von der EIA (Electronic Industries Association) sowie in Europa mittels ITU-T V.11 genormt ist. Von EIA-422 bzw. RS-422 wird ein Standard für asynchrone, serielle Datenübertragung über meist relativ kurze Distanzen beschrieben.

## Kurzbeschreibung der Zeichnung

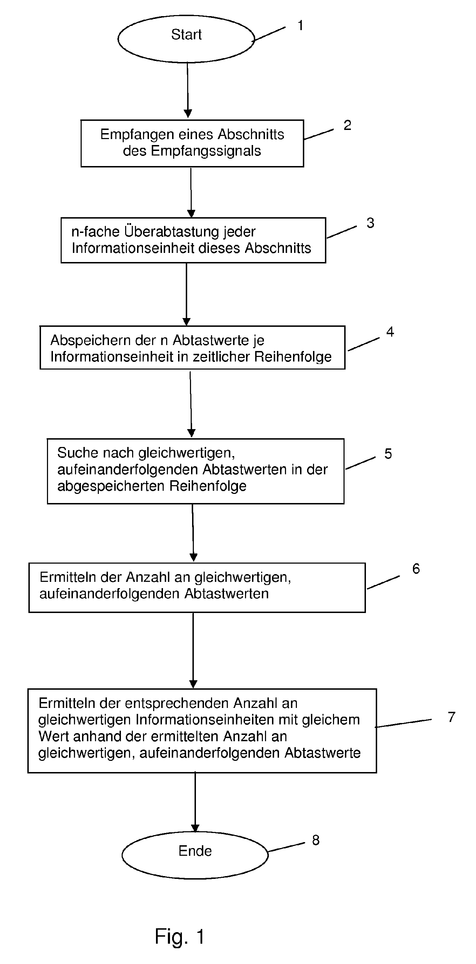

Die Erfindung wird nachfolgend in beispielhafter Weise anhand einer beigefügten Figur erläutert. Figur 1 zeigt schematisch in beispielhafter Weise den Ablauf des erfindungsgemäßen Verfahrens.

## Ausführung der Erfindung

Figur 1 zeigt dabei den schematischen Ablauf des erfindungsgemäßen Verfahrens, welches mit einem Startschritt 1 begonnen wird.

In einem zweiten Verfahrensschritt 2 wird ein Abschnitt eines meist aus mehreren Abschnitten bestehenden Empfangssignals von einem Empfänger empfangen, von welchem eine serielle Schnittstelle wie beispielsweise eine EIA-422- oder eine EIA-485-Schnittstelle mit einer größeren als spezifizierten Leitungslänge betrieben wird. Die Abschnitte des Empfangssignals werden mittels serieller Datenübertragung übertragen, wobei ein Abschnitt üblicherweise neben einem Start- und Stopppunkt, welche auch als Start- und Stoppbit bezeichnet werden, acht Informationseinheiten bzw. acht Bits für eine Datenübertragung aufweist. Dieser Abschnitt, welcher in Summe zehn Informationseinheiten umfasst, kann auch als Wort oder Byte bezeichnet werden. Bei einer seriellen, asynchronen Datenübertragung weisen Start- und Stoppbit üblicherweise unterschiedliche Werte auf. Ist z.B. das Startbit mit dem Wert "1" oder "high" versehen, so wird dem Stoppbit definitionsgemäß der Wert "0" oder "low" zugewiesen.

In einem dritten Verfahrensschritt 3 wird jede Informationseinheit bzw. jedes Bit des empfangenen Abschnitts n-fach überabgetastet. Dabei stellt beispielsweise eine Abtastrate von 12 einen idealen Wert im Bezug auf Genauigkeit und Rechenaufwand für das erfindungsgemäße Verfahren dar. Durch die n-fache Überabtastung ergeben sich nun beim Empfangssignal n Abtastwerte pro empfangender Informationseinheit (Bit), welche in einem vierten Verfahrensschritt 4 in zeitlicher Reihenfolge abgespeichert werden.

In einem fünften Verfahrensschritt 5 werden in der abgespeicherten Reihenfolge von Abtastwerten aufeinanderfolgende Abtastwerte mit gleichem Wert gesucht. Bei einem sechsten Verfahrensschritt 6 wird dann einen Anzahl der aufeinanderfolgenden Abtastwerte mit gleichem Wert ermittelt. Weist z.B. eine Folge von fünf, in zeitlicher Abfolge gespeicherten Abtastwerten den Wert "1" bzw. "high" auf, so wird diese Folge gesucht und die Anzahl fünf für aufeinanderfolgende Abtastwerte mit gleichem Wert festgestellt.

In einem siebten Verfahrensschritt 7 wird dann auf Basis der ermittelten Anzahl (z.B. fünf) an gleichwertigen, aufeinanderfolgenden Abtastwerten eine entsprechende Anzahl an Informationseinheiten bzw. Bits mit gleichem Wert (z.B. "1" oder "high") ermittelt. Diese festgestellte Anzahl an aufeinanderfolgenden, gleichwertigen Informationseinheiten bzw. Bits stellt damit auch eine Folge von gleichwertigen Informationseinheiten bzw. Bits im Empfangssignal dar und wird vom Empfänger dann entsprechend interpretiert.

Bei der Ermittlung der Anzahl an aufeinanderfolgenden, gleichwertigen Informationseinheiten bzw. Bits wird z.B. von folgenden Zusammenhängen ausgegangen:

Die Anzahl $n_i$ der Abtastwerte von i gleichwertigen Informationseinheiten (Bits) hängt über die Formel $n_i = i*n_s$ mit der $n_s$-fachen Überabtastung jeder Informationseinheit (jedes Bits) zusammen. Die Variable i steht dabei für eine Anzahl an gleichwertigen Bits, ist eine natürliche Zahl und kann beispielsweise von i = 1 bis I laufen. I kann z.B. bei einem Wort als auszuwertender Abschnitt eines Empfangssignals mit I = 9 festgelegt werden. Damit werden beispielsweise eine n-fache Überabtastung von einem Startbit und den darauf folgenden acht Datenbits durchgeführt.

Der Index i der Variable $n_i$ steht für eine Anzahl an Abtastwerten für i Bits. Durch den Index s wird nur die n-fache Übertastung bzw. Abtastrate für jede Informationseinheit näher spezifiziert, um die Variable $n_s$ von der Anzahl der Abtastwerte $n_i$ zu unterscheiden. s steht damit beispielsweise für den Begriff "sample" oder "sampling" und $n_s$ weist im Gegensatz zu $n_i$ einen fixen Wert (z.B. 12) pro Informationseinheit auf.

Eine Abtastfrequenz $f_s$ ergibt als $f_s = R*n_s$, wobei R eine Bitrate auf einer Übertragungsleitung und $n_s$ wieder die $n_s$-fache Überabtastung jeder Informationseinheit darstellt. Daraus folgt, dass bei einer tatsächlich empfangenen Signalform (z.B. verzerrtes Signal aufgrund einer Übertragungsleitung, etc.) die Anzahl $n_i$ der Abtastwerte gleichwertiger Informationseinheiten bzw. Bits von der Anzahl i gleichwertiger Informationseinheiten abhängt. D.h. die Anzahl $n_i$ ist eine Funktion f der Anzahl i oder $n_i = f(i)$.

Dieser Zusammenhang wird dann im siebten Verfahrensschritt 7 z.B. von einem Signalprozessor beim Empfänger ausgewertet. Dies kann entweder rechnerisch oder mittels zumindest einer entsprechenden Tabelle, welche auch als Lookup-Table bezeichnet wird, durchgeführt.

Bei der rechnerischen Auswertung wird geprüft, ob die ermittelte Anzahl $n_i$ an gleichwertigen, aufeinanderfolgenden Abtastwerten zwischen einer entsprechenden unteren und einer entsprechenden oberen Grenze liegt. Mittels dieser Grenzen wird dann die entsprechende Anzahl i an aufeinanderfolgenden, gleichwertigen Informationseinheiten im entsprechenden Abschnitt oder Wort des Empfangssignals bestimmt. Die untere Grenze wird gemäß der Formel $((2*i-1)*n_s)/2 + 1$ ermittelt. Die obere Grenze ergibt sich aus der Formel $((2*i + 1)*n_s)/2$, wobei i wieder die Variable für die Anzahl an gleichwertigen Bits und eine natürliche Zahl ist und von i = 1 bis I laufen kann. $n_s$ gibt wieder die $n_s$-fachen Überabtastung jeder Informationseinheit bzw. jedes Bits an und z.B. mit dem Wert 12 belegt. Ein Startwert für die untere Grenze kann beispielsweise mit 2 festgelegt werden, da auf diese Weise auch bei einer Verzögerung des Abtastbeginns (z.B. durch Verschleifen von Flanke im Empfangssignal, durch Fehlen des Stoppbits, etc.) auch das erste Bit bzw. dessen Wert richtig interpretiert wird.

Bei der Auswertung mittels zumindest einem so genannten Lookup-Table wird eine Tabelle bit_lookup [] mit folgendem Aufbau für z.B. eine Abtastrate $n_s$ =12 verwendet.

```
bit_lookup[] = {0,
1,1,1,1,1,1,
1,1,1,1,1,1,1,1,1,1,1,1,
2,2,2,2,2,2,2,2,2,2,2,2,
3,3,3,3,3,3,3,3,3,3,3,3,
4,4,4,4,4,4,4,4,4,4,4,4,
5,5,5,5,5,5,5,5,5,5,5,5,
6,6,6,6,6,6,6,6,6,6,6,6,
7,7,7,7,7,7,7,7,7,7,7,7,
8,8,8,8,8,8,8,8,8,8,8,8,
9,9,9,9,9,9,9,9,9,9,9,9}
```

Diese Tabelle wird mit der ermittelten Anzahl $n_i$ an gleichwertigen, aufeinanderfolgenden Abtastwerten indiziert. D.h. ein Tabelleneintrag an der Stelle $n_i$ gibt auf einfache Weise die Anzahl an gleichwertigen, aufeinanderfolgenden Informationseinheiten bzw. Bits im auszuwertenden Abschnitt des Empfangssignals an.

Weiters wird vom erfindungsgemäßen Verfahren die Möglichkeit geboten, unterschiedliche Breiten von Bits mit dem Wert "1" bzw. "high" und mit dem Wert "0" bzw. "low" zu berücksichtigen. Die unterschiedliche Breite der jeweiligen Bits ergibt sich durch das Verschleifen der Flanken bei der seriellen Datenübertragung. Dadurch werden Bits mit dem Wert "1" bzw. "high" tendenziell länger und Bits mit dem Wert "0" bzw. "low" tendenziell kürzer als im Idealfall - d.h. bei einer verzerrungsfreien Übertragung.

Um die unterschiedlichen Bitbreiten berücksichtigen zu können, werden zwei Lookup-Tables - einer für Lowbereiche und einer für Highbereiche - verwendet und entsprechend adaptiv angepasst, wobei eine Anpassung wie folgt durchgeführt wird:

Wird auf Empfang eines einzelnen Bits entschieden, so wird die Anzahl an Abtastwerte, welche zu dieser Entscheidung geführt hat, abgespeichert und über einen entsprechenden Zeitraum gemittelt. Daraus werden dann ein entsprechender Mittelwert für die Dauer einzelner "0"- bzw. "low"-Bits und ein entsprechender Mittelwert für die Dauer einzelner "1"- bzw. "high"-Bits ermittelt und die Lookup-Tables entsprechend folgendermaßen angepasst:

- bit_lookup[0] = 0 ..... Dummy-Element, da 0 Abtastwerte nicht auftreten
- bit_lookup [1 ... $n_s$/2] ..... Auffüllen einer halben Bitbreite, welche im Idealfall einer halben Abtastrate $n_s$/2 entspricht, mit dem Wert "1"
- bit_lookup [($n_s$/2 +1) ... ($n_s$/2 + $\frac{n_i}{2}$)] ..... Auffüllen der Bitbreite eines einzelnen Bits mit dem Wert 1
- für alle weiteren Bereiche wird die Bitbreite $n_s$, welche im Idealfall der Abtastrate $n_s$ entspricht, angenommen

Dadurch wird erreicht, dass Einscheidungsbereiche im entsprechenden Lookup-Table um beispielsweise 3, 4, 5, usw. Stellen nach vor gerückt werden, wenn z.B. einzelne Bits tendenziell kürzer sind, und auf diese Weise einen Anpassung an die jeweilige Bitbreite durchgeführt wird.

Bei der Verwendung von zumindest einem Lookup-Table besteht weiters die Möglichkeit, die Tabelle bit_lookup[] derart anzupassen, dass z.B. Störimpulse vom Empfänger nicht als gültiges Bit interpretiert werden. Zu diesem Zweck wird in der Tabelle der Wert mit dem Index 1 auf 0 gesetzt - d.h. bit_lookup[1] = 0. Auf diese Weise werden kurze Störimpulse unterdrückt, durch welche es zu ein oder zwei fehlerhaften (anderswertigen) Abtastwerten kommen kann. Ein zu diesem Zweck angepasster Lookup-Table für eine Abtastrate $n_s$ = 12 sieht z.B. wie folgt aus:

```
bit_lookup[] = {0,
0,1,1,1,1,1,
1,1,1,1,1,1,1,1,1,1,1,1,
2,2,2,2,2,2,2,2,2,2,2,2,
3,3,3,3,3,3,3,3,3,3,3,3,
4,4,4,4,4,4,4,4,4,4,4,4,
5,5,5,5,5,5,5,5,5,5,5,5,
6,6,6,6,6,6,6,6,6,6,6,6,
7,7,7,7,7,7,7,7,7,7,7,7,
8,8,8,8,8,8,8,8,8,8,8,8,
9,9,9,9,9,9,9,9,9,9,9,9}
```

Durch das Verschleifen von Flanke von Informationseinheiten, werden üblicherweise Informationseinheiten mit dem Wert "high" bzw. "1" tendenziell länger und Informationseinheiten mit dem Wert "low" bzw. "0" tendenziell kürzer - im Vergleich zu einer definierten und vom Empfänger erwartetem Länge einer Informationseinheit bzw. eines Bits. Dieses Verschleifen der Flanken kann bei "0"- bzw. "low"-Bits sogar dazu führen, dass diese im Empfangssignal völlig verschwinden.

Dieses völlige Verschwinden von einzelnen "0"-Bits kann insbesondere bei einer asynchronen, seriellen Datenübertragung zu Fehler führen, da vom Empfänger neben einem Startbit auch ein Stoppbit, welches üblicherweise mit dem Wert "0" oder "low" belegt ist, am Ende eines Abschnitts erwartet wird.

Das erfindungsgemäße Verfahren berücksichtigt auch diese mögliche Fehlerquelle, indem beispielsweise ein Wort, welches neben Start- und Stoppbit genau acht Datenbits umfasst, für die Dauer von 9,5 Bits ausgewertet wird. Danach wird von Empfänger erwartet, dass der Wert "0" oder "low" detektiert wird, da nach 9,5 Bits im Idealfall die Abtastung einer Mitte des Stoppbits vorgenommen werden sollte. Wird nach 9,5 Bits z.B. der Wert "0" bzw. "low" detektiert, so wird angenommen, dass ein Stoppbit abgetastet wurde und der nächste Abtastwert mit dem Wert "1" bzw. "high" als Flanke des nächsten Startbits interpretiert. Wird allerdings nach 9,5 Bits der Wert "1" bzw. "high" vom Empfänger gemessen, so gibt es zwei Möglichkeiten:

- es wurden bereits 10 Bits (d.h. Startbit, 8 Datenbits und Stoppbit) erkannt. Daher wird in diesem Fall angenommen, dass der detektierte Wert bereits im nächsten Startbit liegt und eine Erkennung des nächsten Abschnitts bzw. Worts gestartet.
- es wurden bisher weniger als 10 Bits erkannt. Dann wird angenommen, dass der detektierte Wert noch zum letzten Datenbit gehört.

Auf diese Weise wird verhindert, dass auch bei auftretenden Bitfehlern im Stoppbit eine falsche Flanke als Startbit bzw. Beginn eines nächsten Abschnitts bzw. Worts eines Empfangssignals interpretiert wird.

Im Laborversuch wurde das erfindungsgemäße Verfahren bereits mit einem EIA-422-Transceiverbausteine MAX3086 mit 5 Volt und einem 1,6 mm2 twisted pair Kupferkabel als Leitung implementiert und getestet. Dabei wurden für eine 2 km lange Leitung eine Datenrate von 192.000 Bits/s und für eine 4 km lange Leitung eine Datenrate von 96.000 Bits/s fehlerfrei realisiert.

Das erfindungsgemäße Verfahren ist besonders für Empfänger bei einer seriellen Übertragung von Echtzeit- oder Sprachdaten im Bereich von Notrufplattformen oder bei Voiceover-IP geeignet.

**Patentansprüche**

1. Verfahren zum Auswerten von Empfangssignalen bei serieller Datenübertragung, wobei ein Empfangssignal aus einer Anzahl von Abschnitten, insbesondere Worten, besteht, welche zwischen einem Start- und Stoppunkt eine definierte Länge und eine definierte Zahl von Informationseinheiten, insbesondere Bits, aufweisen,
**dadurch gekennzeichnet, dass**

   - die Informationseinheiten jedes Abschnittes des Empfangssignals über die definierte Länge des Abschnittes n-fach abgetastet werden (2, 3),
   - dass dann während einer Abtastung ermittelte Abtastwerte für den jeweiligen Abschnitt in zeitlicher Reihenfolge abgespeichert werden (4), wobei jede ununterbrochene Folge von gleichwertigen Abtastwerten einen High- bzw. Lowbereich definiert (5),
   - und dass anhand der durch die Anzahl an aufeinanderfolgenden, gleichwertigen Abtastwerte bestimmten Länge des High- bzw. Lowbereiches die darin enthaltene Anzahl von entsprechenden Informationseinheiten bestimmt wird (6, 7).

2. Verfahren nach Anspruch 1, **dadurch gekennzeichnet, dass** die in einer durch die Anzahl an aufeinanderfolgenden, gleichwertigen Abtastwerten bestimmten Länge des High- bzw. Lowbereiches enthaltene Anzahl von entsprechenden Informationseinheiten gemäß der Formel $((2*x-1)*n)/2 + 1 <= n*x <= ((2*x + 1)*n)/2$ derart ermittelt wird, dass der Ausdruck $((2*x-1)*n)/2 + 1$ eine untere Grenze und der Ausdruck $((2*x + 1)*n)/2$ eine obere Grenze darstellt, zwischen welchen die Anzahl an aufeinanderfolgenden, gleichwertigen Abtastwerten einer bestimmten Länge des High- bzw. Lowbereiches liegt, um einer Anzahl an x Informationseinheiten zu entsprechen, wobei eine Variable x für eine natürliche, ganze Zahl größer gleich 1, eine Variable n für die n-fache Abtastung jeder Informationseinheit steht und der Ausdruck $n*x$ einen Idealwert für eine Anzahl an Abtastwerten bei unverfälschten Empfangssignal darstellt.

3. Verfahren nach Anspruch 2, **dadurch gekennzeichnet, dass** für den Wert 1 der Variable x, welcher einer Anzahl von einer Informationseinheit entspricht, die untere Grenze auf den Wert 2 gesetzt wird.

4. Verfahren nach Anspruch 1, **dadurch gekennzeichnet, dass** die in einer durch die Anzahl an aufeinanderfolgenden, gleichwertigen Abtastwerten bestimmte Länge des High- bzw. Lowbereiches enthaltene Anzahl von entsprechenden Informationseinheiten anhand von zumindest einer Tabelle ermittelt wird.

5. Verfahren nach Anspruch 4, **dadurch gekennzeichnet, dass** für eine Ermittlung der Anzahl an Informationseinheiten eine Tabelle für Highbereiche und eine Tabelle für Lowbereiche eingesetzt wird.

6. Verfahren nach einem der vorangegangen Ansprüche, **dadurch gekennzeichnet, dass** eine adaptive Anpassung derart durchgeführt wird, dass anhand von bereits ermittelten Informationseinheiten durchschnittliche Werte für die Länge dieser Informationseinheiten bestimmt werden und diese durchschnittlichen Werte für die weitere Ermittlung der Anzahl an Informationseinheiten verwendet werden.

7. Verfahren nach einem der vorangegangen Ansprüche, **dadurch gekennzeichnet, dass** Folgen von aufeinanderfolgenden, gleichwertigen Abtastwerten, von welchen eine vorgegebene Anzahl nicht überschritten wird, als Störimpulse erkannt und für die weitere Auswertung nicht herangezogen werden.

8. Verfahren nach einem der vorangegangen Ansprüche, **dadurch gekennzeichnet, dass** bei einer Auswertung eines Abschnitt nach einer definierten Zahl an Informationseinheiten ein Stoppunkt mit definiertem Wert erwartet wird, dass der Wert einer In-

formationseinheit, welche als Stoppunkt des Abschnitts interpretiert wird, überprüft wird,
dass wenn als der Wert der als Stoppunkt des Abschnitts interpretierten Informationseinheit nicht der erwarteten Wert detektiert wird, die Anzahl der bereits ausgewerteten Informationseinheiten dieses Abschnitts bestimmt wird
und dass in Abhängigkeit von dieser Anzahl die als Stoppunkt interpretierte Informationseinheit des Abschnitt entweder als Startpunkt des folgenden Abschnitts oder letzte Informationseinheit vor dem Stoppunkt dieses Abschnitts interpretiert wird.

9.  Verfahren nach einem der vorangegangen Ansprüche, **dadurch gekennzeichnet, dass** die Auswertung des Empfangssignals an einer asynchronen, seriellen Schnittstelle durchgeführt wird.

10. Verfahren nach einem der vorangegangen Ansprüche,
    **dadurch gekennzeichnet, dass** als asynchrone, serielle Schnittstelle eine so genannte EIA-422-Schnittstelle eingesetzt wird.

Fig. 1

**Europäisches Patentamt**

## EUROPÄISCHER RECHERCHENBERICHT

Nummer der Anmeldung

EP 07 11 5613

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 562 183 A (ALCATEL NV [NL]; BELL TELEPHONE MFG [BE]) 29. September 1993 (1993-09-29) * Seite 3, Zeile 35 - Zeile 45 * * Seite 4, letzter Absatz * ----- | 1,4,5,9, 10 | INV. H04L25/06 H04L25/40 H04L7/033 |
| A | US 4 382 298 A (EVANS MICHAEL W) 3. Mai 1983 (1983-05-03) * Spalte 3, Zeile 28 - Zeile 60 * ----- | 1,9,10 | |

RECHERCHIERTE SACHGEBIETE (IPC)

H04L

Der vorliegende Recherchenbericht wurde für alle Patentansprüche erstellt

| Recherchenort | Abschlußdatum der Recherche | Prüfer |
|---|---|---|
| Berlin | 24. Januar 2008 | Farese, Luca |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 07 11 5613

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-01-2008

| Im Recherchenbericht angeführtes Patentdokument | Datum der Veröffentlichung | Mitglied(er) der Patentfamilie | Datum der Veröffentlichung |
|---|---|---|---|
| EP 0562183 A | 29-09-1993 | AU 3527793 A<br>CA 2092786 A1<br>JP 6326698 A<br>US 5400367 A | 30-09-1993<br>28-09-1993<br>25-11-1994<br>21-03-1995 |
| US 4382298 A | 03-05-1983 | JP 1807182 C<br>JP 5007908 B<br>JP 57176859 A | 10-12-1993<br>29-01-1993<br>30-10-1982 |

EPO FORM P0461

Für nähere Einzelheiten zu diesem Anhang : siehe Amtsblatt des Europäischen Patentamts, Nr.12/82